(19) Europäisches Patentamt / European Patent Office / Office européen des brevets

(11) **EP 3 436 779 B1**

(12) **FASCICULE DE BREVET EUROPEEN**

(45) Date de publication et mention de la délivrance du brevet:
**23.09.2020 Bulletin 2020/39**

(21) Numéro de dépôt: **17712801.4**

(22) Date de dépôt: **28.03.2017**

(51) Int Cl.:
**G01C 19/60** (2006.01)        **G01C 25/00** (2006.01)
**G01C 19/56** (2012.01)

(86) Numéro de dépôt international:
**PCT/EP2017/057254**

(87) Numéro de publication internationale:
**WO 2017/167717 (05.10.2017 Gazette 2017/40)**

(54) **DISPOSITIF DE MESURE DE ROTATION, PROCÉDÉ ET CENTRALE DE NAVIGATION INERTIELLE ASSOCIÉS**

VORRICHTUNG ZUR ROTATIONSMESSUNG, ENTSPRECHENDES VERFAHREN UND TRÄGHEITSNAVIGATIONSEINHEIT

DEVICE FOR MEASURING ROTATION, ASSOCIATED METHOD AND INERTIAL NAVIGATION UNIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.03.2016 FR 1652833**

(43) Date de publication de la demande:
**06.02.2019 Bulletin 2019/06**

(73) Titulaires:
• **Commissariat à l'énergie atomique et aux énergies alternatives**
**75015 Paris (FR)**
• **Safran**
**75015 Paris (FR)**

(72) Inventeurs:
• **PALACIOS LALOY, Augustin**
**38120 Saint Egreve (FR)**
• **BRUNSTEIN, Etienne**
**77550 Moissy-Cramayel (FR)**
• **GRAMLICH, Marc**
**77550 Moissy-Cramayel (FR)**
• **MORALES, Sophie**
**38760 Varces (FR)**

(74) Mandataire: **Brevalex**
**95, rue d'Amsterdam**
**75378 Paris Cedex 8 (FR)**

(56) Documents cités:
**EP-A1- 1 865 283     EP-A2- 2 629 053**

• **Andrei Shkel: "The Chip-Scale Combinatorial Atomic Navigator", , 1 août 2013 (2013-08-01), XP055317284, Extrait de l'Internet: URL:http://mems.eng.uci.edu/files/2013/09/ GPS0813_ExpAdv_Shkel_v3.pdf [extrait le 2016-11-08] & Yolanda Murphy: "Northrop Grumman Awarded Contract to Develop Miniaturized Inertial Navigation System for DARPA", , 5 juin 2014 (2014-06-05), Extrait de l'Internet: URL:http://globenewswire.com/news-release/ 2014/06/05/642127/10084684/en/Northrop-Gru mman-Awarded-Contract-to-Develop-Miniaturi zed-Inertial-Navigation-System-for-DARPA.h tml [extrait le 2016-11-08]**

**Description**

**DOMAINE TECHNIQUE**

La présente invention concerne un dispositif de mesure de rotation comportant un gyroscope RMN présentant un axe sensible prédéterminé et un calculateur, le gyroscope RMN comprenant en outre un organe de génération configuré pour générer un champ magnétique dirigé le long de l'axe sensible, le calculateur étant configuré pour calculer, à partir d'un signal RMN délivré par le gyroscope RMN, une information relative à une rotation autour de l'axe sensible.

L'invention a également pour objet une centrale de navigation inertielle, un procédé de mesure de rotation et un produit programme d'ordinateur.

L'invention s'applique au domaine des gyroscopes atomiques à spin (ou ASG, de l'anglais « *atomic spin gyroscopes* »), en particulier au domaine des gyroscopes à résonance magnétique nucléaire, encore appelés « gyroscopes RMN ». L'invention s'applique, par exemple, au domaine de la navigation inertielle par gyroscope, notamment par gyroscope RMN.

**ÉTAT DE LA TECHNIQUE ANTÉRIEURE**

Il est connu de recourir à un gyroscope RMN pour mesurer une rotation autour d'un axe, encore appelé « axe sensible », d'un mobile (typiquement un véhicule) lié au gyroscope RMN par rapport à un référentiel inertiel.

De façon classique, un gyroscope RMN comporte une cellule comprenant un gaz de détection. Un tel gaz de détection comporte au moins une espèce chimique présentant un spin nucléaire non nul. Par exemple, le gaz de détection peut comporter un mélange de xénon 129 et de xénon 131.

En fonctionnement, les spins nucléaires des différents atomes du gaz de détection sont d'abord orientés selon une direction prédéterminée. De plus, un champ magnétique statique, dirigé le long de l'axe sensible, est appliqué au gaz de détection dans la cellule. Un ensemble de champs magnétiques oscillants (aussi nombreux que les espèces sensibles du gaz de détection) sont également appliqués au gaz de détection. Chacun de ces champs magnétiques oscille successivement au cours du temps à une fréquence de plus en plus proche de la fréquence propre d'oscillation de l'espèce sensible correspondante du gaz de détection, selon le principe de l'auto-oscillateur RMN, bien connu dans le domaine et mis en œuvre notamment dans la demande de brevet US4157495A. Ceci a pour effet d'entraîner une précession, autour de l'axe sensible, des spins nucléaires de chacune des espèces chimiques de spin non nul présentes dans le gaz de détection.

De façon classique, la mesure de la fréquence de précession conduit à une mesure de la vitesse de rotation autour de l'axe sensible d'un référentiel lié au gyroscope par rapport à un référentiel inertiel, selon la formule :

$$\omega = \omega_L \pm \omega_R \ (1)$$

où $\omega$ est la fréquence de précession des spins, mesurée dans le référentiel lié au gyroscope,

$\omega_L$ est une fréquence dite « fréquence de Larmor », dépendant uniquement de l'amplitude du champ magnétique statique et d'une grandeur intrinsèque propre à chacune des espèces de spin nucléaire non nul présentes dans le gaz de détection, ladite grandeur étant appelée « rapport gyromagnétique »,

$\omega_R$ est la fréquence de rotation du gyroscope projetée sur l'axe sensible,

le signe dépendant du sens de la rotation du gyroscope par rapport au sens de la précession des spins autour de l'axe sensible.

De tels gyroscopes RMN sont susceptibles d'être intégrés dans des dispositifs de mesure de rotation destinés à être utilisés dans le cadre de la navigation inertielle.

Une telle utilisation requiert toutefois que des critères prédéterminés soient remplis.

En mode dit *strapdown,* c'est-à-dire lorsque le gyroscope est solidaire d'un porteur (tel qu'un véhicule terrestre, marin, sous-marin, aérien ou spatial), directement ou par l'intermédiaire d'un organe de suspension, de tels critères sont, par exemple, une dérive inférieure ou égale à 0,01°/h (degré par heure) et une marche aléatoire angulaire (ou ARW, acronyme de l'expression anglaise « *angle random walk* ») inférieure ou égale à 0,002°/√h (degré par racine d'heure).

La fourniture de mesures fiables par le dispositif de mesure de rotation requiert que la bande passante de détection du gyroscope RMN soit suffisamment grande par rapport à l'étendue spectrale des phénomènes de rotation du porteur autour de l'axe sensible. Notamment, dans le cas de phénomènes vibratoires, cette étendue spectrale est susceptible d'atteindre plusieurs centaines de hertz, selon le comportement des organes de suspension par l'intermédiaire desquels la centrale inertielle est solidaire du porteur.

Cette condition portant sur la bande passante a notamment pour but de limiter des problèmes de repliement spectral qui apparaissent dans le cas du gyroscope RMN. En effet, le phénomène détecté par le gyroscope RMN, à savoir la précession des spins, est modulé par les vibrations du porteur, dont la bande passante est généralement de l'ordre de quelques centaines de hertz, par exemple autour de 300 Hz. Ainsi, du fait de cette modulation, il est possible que le signal de rotation détecté par le gyroscope RMN soit entachée d'erreur, notamment si l'étendue spectrale des phénomènes de rotation est supérieure à la bande passante de détection du gyroscope.

La réalisation de mesures de fréquence fiables requiert donc une bande passante élevée.

Or, dans les gyroscopes RMN, la bande passante est proportionnelle à l'amplitude du champ magnétique statique. Ainsi, pour éviter les problèmes de repliement spectral et ainsi réaliser des mesures de fréquence fiables, quelle que soit la fréquence des vibrations du porteur, il est connu d'appliquer un champ magnétique statique présentant une amplitude élevée, par exemple de l'ordre de 1000 $\mu$T (microtesla), afin d'obtenir une grande bande passante.

Néanmoins, des dispositifs de mesure comportant de tels gyroscopes RMN ne donnent pas entière satisfaction.

En effet, de tels gyroscopes sont surdimensionnés, ce qui se traduit généralement par une consommation électrique et un encombrement accrus.

En outre, l'augmentation de la valeur du champ magnétique conduit généralement à l'augmentation du module du gradient de champ magnétique au sein de la cellule du gyroscope RMN. Ceci conduit généralement à une dégradation de la valeur du paramètre ARW du gyroscope et nuit à la fiabilité de la mesure dans le cadre de la navigation inertielle.

Le document XP055317284 intitulé "The Chip-Scale Combinatorial Atomic Navigator" par Andrei Shkel divulgue la co-intégration de gyroscopes RMN et MEMS sur une même unité de mesure inertielle.

Un but de l'invention est donc de proposer un dispositif de mesure de rotation par l'intermédiaire d'un gyroscope RMN, qui soit fiable tout en étant moins encombrant et moins coûteux que les dispositifs de mesure usuels.

## EXPOSÉ DE L'INVENTION

A cet effet, l'invention a pour objet un dispositif de mesure de rotation selon la revendication 1.

En effet, les gyroscopes MEMS présentent classiquement une bande passante élevée par rapport aux gyroscopes RMN, et donc un temps de réponse plus court que les gyroscopes RMN. Le recours à un gyroscope MEMS autorise une mesure rapide de la fréquence de coupure, liée notamment aux vibrations du porteur, d'où un ajustement rapide de l'amplitude du champ magnétique statique dans la cellule, et donc un ajustement rapide de la bande passante du gyroscope RMN.

Le choix, au niveau du gyroscope RMN, d'une bande passante ainsi déterminée réduit les problèmes liés au repliement spectral. En outre, ceci conduit à une réduction des dégradations du paramètre ARW qui accompagnent l'utilisation de champs magnétiques d'amplitude élevée.

Un tel dispositif de mesure autorise donc un ajustement dynamique du fonctionnement du gyroscope RMN de manière à opérer dans un régime associé à un compromis optimal entre paramètre ARW et bande passante, à tout moment de la mission.

En outre, les gyroscopes MEMS sont généralement de taille réduite et peu coûteux. Un tel dispositif de mesure est donc moins encombrant et moins coûteux à réaliser que les dispositifs de mesure usuels.

Suivant d'autres aspects avantageux de l'invention, le dispositif comporte une ou plusieurs des caractéristiques suivantes, prise(s) isolément ou suivant toutes les combinaisons techniquement possibles :

- le gyroscope RMN comporte une cellule comprenant un seul gaz de spin nucléaire non nul, le gaz présentant un rapport gyromagnétique, l'organe de génération étant configuré pour générer, au cours du temps, un champ magnétique dont l'amplitude est supérieure ou égale au résultat de la division de la fréquence de coupure par le rapport gyromagnétique du gaz ;
- le gyroscope RMN comporte une cellule comprenant N gaz présentant chacun un spin nucléaire non nul, N étant un entier naturel strictement supérieur à 1, chaque gaz présentant un rapport gyromagnétique propre, les valeurs absolues des rapports gyromagnétiques étant deux à deux distinctes, l'organe de génération étant configuré pour générer, au cours du temps, un champ magnétique dont l'amplitude est supérieure ou égale au maximum entre le résultat de la division de la fréquence de coupure par la plus petite des valeurs absolues des rapports gyromagnétiques, et le résultat de chaque division du double de la fréquence de coupure par chacune des différences entre la valeur absolue d'un rapport gyromagnétique et la valeur absolue d'un rapport gyromagnétique qui est immédiatement inférieure ;

- la cellule comprend un premier gaz et un deuxième gaz, le premier gaz étant le xénon 131 et le deuxième gaz étant le xénon 129 ;
- le calculateur est configuré pour détecter une phase courante parmi une phase de démarrage et une phase de navigation, le calculateur étant, en outre, configuré pour commander, dans le cas où la phase courante est une phase de démarrage, l'organe de génération afin de générer un champ magnétique présentant une amplitude de consigne Prédéterminée.

En outre, l'invention a pour objet un procédé de mesure de rotation selon la revendication 6.

Suivant un autre aspect avantageux de l'invention, le procédé comporte en outre les étapes de :

- détection d'une phase courante parmi une phase de démarrage et une phase de navigation ;
- dans le cas où la phase courante est une phase de démarrage, commande de l'organe de génération pour générer un champ magnétique présentant une amplitude de consigne prédéterminée.

En outre, l'invention a pour objet un produit programme d'ordinateur comprenant des instructions de code de programme qui, lorsqu'elles sont exécutées par un ordinateur, mettent en œuvre le procédé tel que défini ci-dessus.

Suivant un autre aspect avantageux de l'invention, une centrale de navigation inertielle comporte un premier et un deuxième dispositif de mesure tels que définis ci-dessus, le premier et le deuxième dispositif de mesure présentant des axes sensibles non parallèles.

Suivant un autre aspect avantageux de l'invention, la centrale de navigation inertielle comporte un troisième dispositif de mesure tel que défini ci-dessus, le troisième dispositif de mesure présentant un axe sensible non parallèle à chacun des axes sensibles du premier et du deuxième dispositif de mesure.

## BRÈVE DESCRIPTION DES DESSINS

L'invention sera mieux comprise à l'aide de la description qui va suivre, donnée uniquement à titre d'exemple non limitatif et faite en se référant aux dessins annexés sur lesquels :

- la figure 1 est une représentation schématique d'un dispositif de mesure de rotation selon l'invention ; et
- la figure 2 est une représentation schématique d'une centrale inertielle selon l'invention ; et
- la figure 3 est un organigramme du fonctionnement de la centrale inertielle de la figure 2.

## EXPOSÉ DÉTAILLÉ DE MODES DE RÉALISATION PARTICULIERS

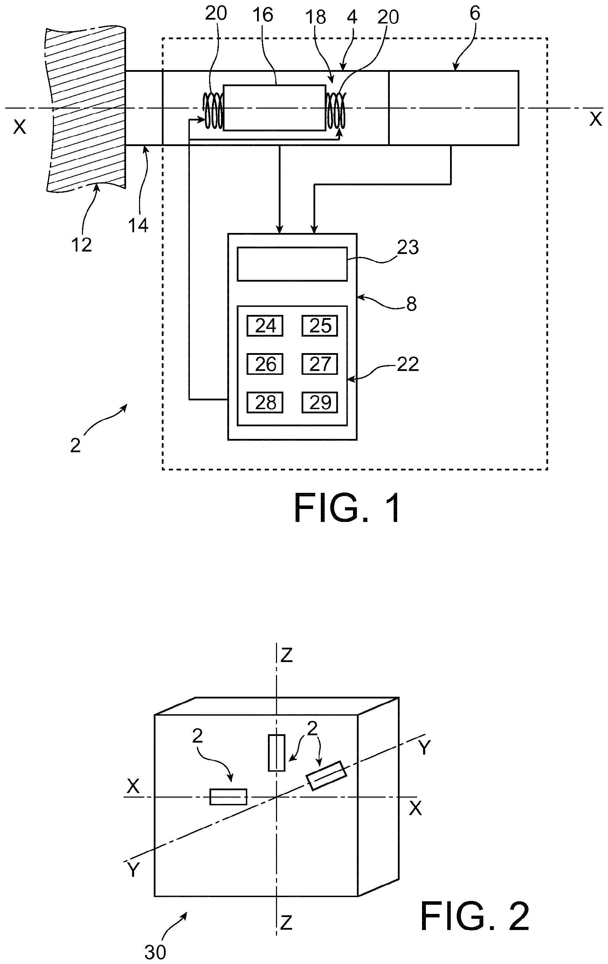

Un dispositif 2 de mesure de rotation selon l'invention est représenté sur la figure 1.

Le dispositif de mesure 2 comporte un gyroscope RMN 4, un gyroscope MEMS 6 et un calculateur 8.

Le gyroscope RMN 4 est solidaire d'un porteur 12. Par exemple, le gyroscope RMN 4 est fixé au porteur 12 par l'intermédiaire d'un organe de suspension 14.

Le gyroscope RMN 4 est propre à mesurer une rotation autour d'un axe X-X prédéterminé associé au gyroscope RMN 4, l'axe prédéterminé étant encore appelé « axe sensible ».

Le gyroscope RMN 4 comprend une cellule 16 et un organe 18 de génération de champ magnétique.

La cellule 16 est, de préférence, une cellule hermétique. La cellule 16 comprend au moins un gaz présentant un spin nucléaire non nul. Chaque gaz de spin nucléaire non nul présente un rapport gyromagnétique propre, noté Y.

Dans le cas où la cellule 16 comprend un premier gaz et un deuxième gaz, le premier gaz présente un premier rapport gyromagnétique $\Upsilon_1$, et le deuxième gaz présente un deuxième rapport gyromagnétique $\Upsilon_2$ dont la valeur absolue est différente de la valeur absolue du premier rapport gyromagnétique $\Upsilon_1$.

Par exemple, le premier gaz est le xénon 129, de rapport gyromagnétique $\Upsilon_1$ valant -10,86 Hz/µT (hertz par microtesla). Par exemple, le deuxième gaz est le xénon 131, de rapport gyromagnétique $\Upsilon_2$ valant 3,52 Hz/µT.

L'organe de génération 18 est configuré pour générer un champ magnétique dirigé le long de l'axe sensible X-X.

Par exemple, l'organe de génération 18 comporte des spires 20 dont l'axe est l'axe sensible X-X, et adaptées pour permettre la circulation d'un courant électrique.

Le gyroscope MEMS 6 (acronyme de « *microelectromechanical systems* ») est un gyroscope à microsystème électromécanique classiquement connu.

Le gyroscope MEMS est solidaire du gyroscope RMN 4.

Le gyroscope MEMS 6 présente un axe sensible confondu avec l'axe sensible X-X du gyroscope RMN 4.

Le gyroscope MEMS 6 est propre à délivrer un signal MEMS représentatif d'une rotation du porteur 12 autour de l'axe sensible X-X. En particulier, le gyroscope MEMS 6 est propre à délivrer un signal MEMS représentatif des vibrations mécaniques du porteur 12 autour de l'axe sensible X-X, dans un plan orthogonal à l'axe sensible X-X.

Le calculateur 8 est relié au gyroscope MEMS 6 pour recevoir le signal MEMS. Le calculateur 8 est également relié au gyroscope RMN 4 pour recevoir un signal RMN représentatif des rotations du porteur 12 autour de l'axe sensible X-X.

Le calculateur 8 comporte une mémoire 22 et un processeur 23.

La mémoire 22 est configurée pour stocker un logiciel d'analyse 24, un logiciel de calcul 25, un logiciel de commande 26 et un logiciel de synthèse 27.

Avantageusement, la mémoire 22 est également configurée pour stocker un logiciel de détection 28.

La mémoire 22 comporte, en outre, un emplacement mémoire 29.

Le logiciel d'analyse 24 est configuré pour analyser, au cours du temps, le signal MEMS. En particulier, le logiciel d'analyse 24 est configuré pour analyser le signal MEMS au cours du temps afin de déterminer une fréquence de coupure W représentative d'un seuil au-delà duquel les vibrations du porteur 12 sont considérées comme négligeables. Par exemple, le logiciel d'analyse 24 est configuré pour calculer le spectre du signal MEMS au cours du temps et pour affecter à la fréquence de coupure la valeur de fréquence à partir de laquelle l'amplitude du spectre du signal MEMS est inférieure ou égale à un seuil prédéterminé.

Le logiciel de calcul 25 est configuré pour calculer au cours du temps, et à partir de la fréquence de coupure W courante, une amplitude de consigne B pour le <u>champ</u> magnétique statique appliqué à la cellule 16 du gyroscope RMN 4.

En particulier, si la cellule 16 du gyroscope RMN 4 comprend un seul gaz de spin nucléaire non nul et de rapport gyromagnétique Y, le logiciel de calcul 25 est configuré pour calculer, au cours du temps, une amplitude de consigne B qui est supérieure ou égale au résultat de la division de la fréquence de coupure W par la valeur absolue $|\Upsilon|$ du rapport gyromagnétique du gaz Y :

$$B \geq \frac{W}{|\gamma|}$$

où $|\ |$ est l'opérateur « valeur absolue ».

Par exemple, à un instant donné, l'amplitude de consigne B courante est égale au résultat de la division de la fréquence de coupure W courante par la valeur absolue $|\Upsilon|$ du rapport gyromagnétique du gaz Y, multiplié par un facteur strictement supérieur à un.

En outre, si la cellule 16 du gyroscope RMN 4 comprend un premier gaz de premier rapport gyromagnétique $\Upsilon_1$, et un deuxième gaz de deuxième rapport gyromagnétique $\Upsilon_2$, la valeur absolue $|\Upsilon_2|$ du deuxième rapport gyromagnétique $\Upsilon_2$ étant supérieure à la valeur absolue $|\Upsilon_1|$ du premier rapport gyromagnétique $\Upsilon_1$, le logiciel de calcul 25 est configuré pour calculer, au cours du temps, une amplitude de consigne B qui est supérieure ou égale au maximum entre le résultat de la division de la fréquence de coupure W par la valeur absolue $|\Upsilon_1|$ du premier rapport gyromagnétique $\Upsilon_1$, et le résultat de la division du double de la fréquence de coupure par la différence $|\Upsilon_2| - |\Upsilon_1|$ entre la valeur absolue $|\Upsilon_2|$ du deuxième rapport gyromagnétique $\Upsilon_2$ et la valeur absolue $|\Upsilon_1|$ du premier rapport gyromagnétique $\Upsilon_1$ :

$$B \geq \max\left(\frac{W}{|\gamma_1|}, \frac{2W}{|\gamma_2| - |\gamma_1|}\right) \quad (2)$$

où « max » est l'opérateur maximum.

Par exemple, à un instant donné, l'amplitude de consigne B courante est égale au maximum explicité dans la relation (2), multiplié par un facteur strictement supérieur à un.

Par exemple, avec une fréquence de coupure valant 300 Hz, et une cellule 16 comprenant du xénon 129 et du xénon 131, le logiciel de calcul 25 calcule une amplitude de consigne B qui est supérieure ou égale à 85 $\mu$T, par exemple une amplitude de consigne B égale à 100 $\mu$T.

De façon générale, si la cellule 16 du gyroscope RMN 4 comprend N gaz de spin nucléaire non nul, N étant un entier naturel strictement supérieur à 1, les valeurs absolues de leurs rapports gyromagnétiques étant deux à deux distinctes et étant ordonnées de façon croissante de $|\Upsilon_1|$ (valeur la plus faible), $|\Upsilon_2|$, ..., $|\Upsilon_i|$, ..., jusqu'à $|\Upsilon_N|$

(valeur la plus élevée), le logiciel de calcul 25 est configuré pour calculer, au cours du temps, une amplitude de consigne B qui est supérieure ou égale au maximum entre le résultat de la division de la fréquence de coupure W par la valeur absolue $|\Upsilon_1|$ du premier rapport gyromagnétique $\Upsilon_1$, et le résultat de chaque division du double de la fréquence de coupure W par chacune des différences entre la valeur absolue d'un rapport gyromagnétique $\Upsilon_2$, ..., $\Upsilon_i$, ..., $\Upsilon_N$ et la valeur absolue d'un rapport gyromagnétique $\Upsilon_1$, $\Upsilon_2$, ..., $\Upsilon_{i-1}$, ..., $\Upsilon_{N-1}$ qui est immédiatement inférieur :

$$B \geq \max\left(\frac{W}{|\gamma_1|}, \frac{2W}{|\gamma_2| - |\gamma_1|}, ..., \frac{2W}{|\gamma_i| - |\gamma_{i-1}|}, ..., \frac{2W}{|\gamma_N| - |\gamma_{N-1}|}\right) \quad (3)$$

Par exemple, à un instant donné, l'amplitude de consigne B courante est égale au maximum explicité dans la relation (3), multiplié par un facteur strictement supérieur à un.

A titre d'exemple, pour trois gaz nobles, l'amplitude de consigne vérifie la relation suivante :

$$B \geq \max\left(\frac{W}{|\gamma_1|}, \frac{2W}{|\gamma_2|-|\gamma_1|}, \frac{2W}{|\gamma_3|-|\gamma_2|}\right) (4)$$

Dans ce cas, à un instant donné, l'amplitude de consigne B courante est égale au maximum explicité dans la relation (4), multiplié par un facteur strictement supérieur à un.

Le logiciel de commande 26 est configuré pour commander l'organe de génération 18 afin de générer, au cours du temps, un champ magnétique dont l'amplitude est égale à l'amplitude de consigne B courante calculée par le logiciel de calcul 25.

Le logiciel de synthèse 27 est configuré pour calculer, à partir du signal RMN délivré par le gyroscope RMN 4, une rotation du porteur 12 autour de l'axe sensible X-X, dans un référentiel inertiel prédéterminé.

Le logiciel de détection 28 est configuré pour détecter une phase courante dans laquelle se trouve le dispositif de mesure 2 et/ou le porteur 12, parmi une phase de démarrage et une phase de navigation.

Par exemple, la phase de démarrage correspond à la mise en route d'une centrale inertielle équipée du dispositif de mesure 2, ainsi que du porteur 12. La phase de démarrage correspond, par exemple, à une phase d'alignement consistant en une recherche de nord géographique, fondée sur la détection de la rotation de la terre.

Par exemple, la phase de navigation correspond à une période de déplacement du porteur 12.

Le logiciel de commande 26 est avantageusement configuré pour, dans le cas où le logiciel de détection 28 détecte que la phase courante est la phase de démarrage, commander l'organe de génération 18 afin de générer un champ magnétique présentant une amplitude égale à une amplitude de consigne prédéterminée.

De préférence, l'emplacement mémoire 29 est configuré pour stocker la valeur du rapport gyromagnétique de chacune des espèces de spin nucléaire non nul présentes dans la cellule 16. L'emplacement mémoire 29 est également configuré pour stocker l'amplitude de consigne prédéterminée.

Le processeur 23 est configuré pour exécuter chacun parmi le logiciel d'analyse 24, le logiciel de calcul 25, le logiciel de commande 26, le logiciel de synthèse 27 et le logiciel de détection 28 stockés dans la mémoire 22 du calculateur 8.

En variante, le gyroscope MEMS 6 est solidaire du porteur 12 par l'intermédiaire d'un organe de suspension tel que les vibrations ressenties par le gyroscope RMN 4 et le gyroscope MEMS 6 sont les mêmes. Par exemple, le gyroscope MEMS 6 est solidaire du porteur 12 par l'intermédiaire d'un organe de suspension identique à l'organe de suspension 14 par l'intermédiaire duquel le gyroscope RMN 4 est solidaire du porteur 12. Dans ce cas, le gyroscope RMN 4 et le gyroscope MEMS 6 sont également dits solidaires entre eux.

Une centrale de navigation inertielle 30 selon l'invention est illustrée sur la figure 2.

La centrale de navigation inertielle 30 comporte au moins deux dispositifs de mesure 2 selon l'invention. Par exemple, la centrale de navigation inertielle 30 comporte trois dispositifs de mesure 2, comportant respectivement un axe sensible X-X, Y-Y et Z-Z. Avantageusement, les axes sensibles X-X, Y-Y et Z-Z de chacun des dispositifs de mesure 2 sont deux à deux non parallèles.

Avantageusement, les dispositifs de mesure 2 de la centrale de navigation inertielle 30 partagent un même calculateur 8.

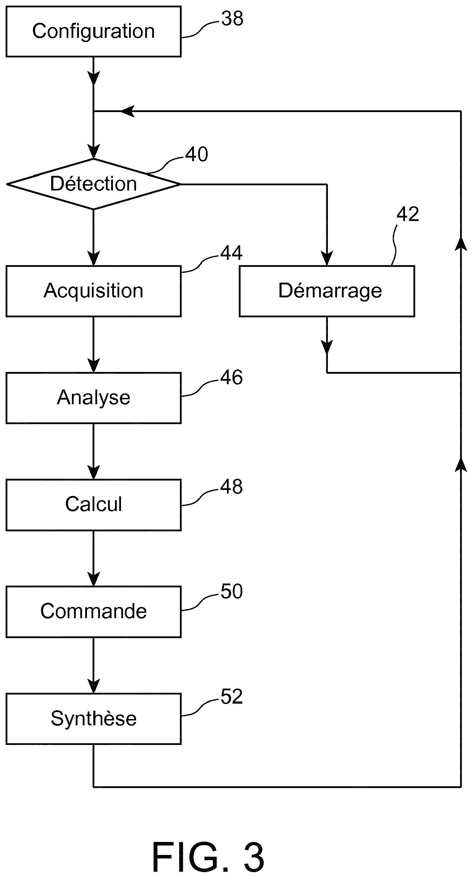

Le fonctionnement de la centrale de navigation inertielle 30 va maintenant être décrit en référence à la figure 3.

En fonctionnement, au cours d'une étape de configuration 38, pour chaque dispositif de mesure 2, un opérateur enregistre, dans l'emplacement mémoire 29 de la mémoire 22, la valeur du rapport gyromagnétique de chacune des espèces de spin nucléaire non nul présentes dans la cellule 16. Avantageusement, l'opérateur enregistre également, dans l'emplacement mémoire 29, l'amplitude de consigne prédéterminée.

Ensuite, au cours d'une étape de détection 40, et pour chaque dispositif de mesure 2 de la centrale de navigation inertielle 30, le logiciel de détection 28 détecte dans quelle phase se trouve la centrale de navigation inertielle 30, parmi la phase de démarrage et la phase de navigation.

Si la phase courante est la phase de démarrage, alors, au cours d'une étape suivante de démarrage 42, le logiciel de commande 26 commande l'organe de génération 18 pour générer un champ magnétique présentant une amplitude égale à l'amplitude de consigne prédéterminée.

De préférence, l'étape de démarrage 42 est suivie de l'étape de détection 40.

Si la phase courante est la phase de navigation, alors, au cours d'une étape suivante d'acquisition 44, le calculateur 8 reçoit, en provenance du gyroscope MEMS, le signal MEMS.

Ensuite, au cours d'une étape d'analyse 46, le logiciel d'analyse 24 analyse le signal MEMS et détermine la fréquence de coupure W courante.

Ensuite, au cours d'une étape de calcul 48, le logiciel de calcul 25 calcule l'amplitude de consigne B courante.

Ensuite, au cours d'une étape de commande 50, le logiciel de commande 26 commande le dispositif de génération 18 pour générer, dans la cellule 16 du gyroscope RMN 4, un champ magnétique dont l'amplitude est égale à l'amplitude de consigne B courante calculée au cours de l'étape de calcul 48.

Ensuite, au cours d'une étape de synthèse 52, le logiciel de synthèse 27 détermine, à partir du signal RMN délivré par chaque gyroscope RMN, une rotation du porteur 12 autour de l'axe sensible X-X, Y-Y, Z-Z correspondant, dans le repère inertiel prédéterminé.

Puis, tant que la phase courante est la phase de navigation, l'étape de synthèse 52 est suivie de l'étape d'acquisition 44.

La détection du fait que la phase courante est la phase de démarrage, conduit à un démarrage rapide du dispositif de mesure. En effet, un démarrage rapide requiert un paramètre ARW le plus faible possible. Or, pendant la phase de démarrage, le porteur 12 est à l'arrêt et présente peu de vibrations mécaniques. Ainsi, il n'est pas nécessaire d'adapter la bande passante du dispositif de mesure 2 pour compenser les vibrations du porteur 12, ce qui autorise l'application, dans le gyroscope RMN 4, d'un champ magnétique statique présentant une faible amplitude, ce qui conduit à un paramètre ARW faible.

La détection du fait que la phase courante est la phase de navigation autorise un ajustement constant de la bande passante du dispositif de mesure 2. En effet, pendant la phase de navigation, le porteur 12 est en mouvement et présente des vibrations mécaniques, ce qui a pour effet d'élargir le spectre des signaux RMN issus du gyroscope RMN. En outre, le contrôle de l'amplitude du champ magnétique statique repose sur un calcul en temps réel de la bande passante requise, et non pas sur une estimation *a priori*, par exemple fondée sur le type de porteur et/ou sur un profil de mission théorique et non réel.

En outre, le dispositif de mesure 2 requiert un temps nécessaire à la phase d'alignement qui est inférieur au temps requis pour les dispositifs usuels.

Généralement, les vibrations du porteur 12 sont des vibrations basse fréquence. Par conséquent, au-delà d'une certaine fréquence qui est de l'ordre de quelques centaines de hertz, par exemple égale à 300 Hz, l'amplitude des vibrations du porteur 12 est suffisamment faible pour que l'impact des vibrations sur la fiabilité de la mesure de rotation soit négligeable. Ainsi, en affectant, à un instant donné, à la fréquence de coupure W courante la valeur de fréquence à partir de laquelle l'amplitude du spectre courant du signal MEMS est inférieure ou égale à un seuil prédéterminé, la bande passante du dispositif de mesure 2 est suffisamment grande pour prendre en compte les effets des vibrations du porteur 12, tout en évitant d'imposer un champ magnétique trop important à la cellule 16, qui risquerait de dégrader le paramètre ARW.

## Revendications

**1.** Dispositif (2) de mesure de rotation comportant un gyroscope RMN (4) présentant un axe sensible (X-X) prédéterminé et un calculateur (8), le gyroscope RMN (4) comprenant en outre un organe de génération (18) configuré pour générer un champ magnétique dirigé le long de l'axe sensible (X-X),
le calculateur (8) étant configuré pour calculer, à partir d'un signal RMN délivré par le gyroscope RMN (4), une information relative à une rotation autour de l'axe sensible (X-X),
le dispositif de mesure (2) comprenant, en outre, un gyroscope MEMS (6) solidaire du gyroscope RMN (4),
le dispositif de mesure étant **caractérisé en ce que**:

le gyroscope MEMS (6)
présente un axe sensible (X-X) confondu avec l'axe sensible (X-X) du gyroscope RMN (4), et propre à délivrer un signal MEMS représentatif d'une rotation autour de l'axe sensible (X-X),

le calculateur (8) étant également configuré pour calculer, au cours du temps, un spectre courant du signal MEMS, et pour déterminer une fréquence de coupure (W) courante égale à la valeur de fréquence à partir de laquelle l'amplitude du spectre courant du signal MEMS est inférieure ou égale à un seuil prédéterminé, le calculateur (8) étant, en outre, configuré pour commander l'organe de génération (18) afin de générer, au cours du temps, un champ magnétique dont l'amplitude est fonction de la fréquence de coupure (W) courante déterminée par le calculateur (8).

**2.** Dispositif de mesure (2) selon la revendication 1, dans lequel le gyroscope RMN (4) comporte une cellule (16) comprenant un seul gaz de spin nucléaire non nul, le gaz présentant un rapport gyromagnétique (Y), l'organe de génération (18) étant configuré pour générer, au cours du temps, un champ magnétique dont l'amplitude est supérieure ou égale au résultat de la division de la fréquence de coupure (W) par le rapport gyromagnétique (Y) du gaz.

**3.** Dispositif de mesure (2) selon la revendication 1, dans lequel le gyroscope RMN (4) comporte une cellule (16) comprenant N gaz présentant chacun un spin nucléaire non nul, N étant un entier naturel strictement supérieur à 1, chaque gaz présentant un rapport gyromagnétique ($\Upsilon_1$, $\Upsilon_2$, ..., $\Upsilon_i$, ..., $\Upsilon_N$) propre, les valeurs absolues des rapports gyromagnétiques étant deux à deux distinctes, l'organe de génération (18) étant configuré pour générer, au cours du temps, un champ magnétique dont l'amplitude est supérieure ou égale au maximum entre le résultat de la division de la fréquence de coupure (W) par la plus petite des valeurs absolues des rapports gyromagnétiques ($\Upsilon_1$, $\Upsilon_2$, ..., $\Upsilon_i$, ..., $\Upsilon_N$), et le résultat de chaque division du double de la fréquence de coupure (W) par chacune des différences entre la valeur absolue d'un rapport gyromagnétique ($\Upsilon_2$, ..., $\Upsilon_i$, ..., $\Upsilon_N$) et la valeur absolue d'un rapport gyromagnétique ($\Upsilon_1$, $\Upsilon_2$, ..., $\Upsilon_{i-1}$, ..., $\Upsilon_{N-1}$) qui est immédiatement inférieure.

**4.** Dispositif de mesure (2) selon la revendication 3, dans lequel la cellule (16) comprend un premier gaz et un deuxième gaz, le premier gaz étant le xénon 131 et le deuxième gaz étant le xénon 129.

**5.** Dispositif de mesure (2) selon l'une quelconque des revendications 1 à 4, dans lequel le calculateur (8) est configuré pour détecter une phase courante parmi une phase de démarrage et une phase de navigation, le calculateur (8) étant, en outre, configuré pour commander, dans le cas où la phase courante est une phase de démarrage, l'organe de génération (18) afin de générer un champ magnétique présentant une amplitude de consigne prédéterminée.

**6.** Procédé de mesure de rotation comportant le calcul d'une information relative à une rotation autour d'un axe sensible (X-X) prédéterminé, à partir d'un signal RMN délivré par un gyroscope RMN (4) présentant l'axe sensible (X-X) prédéterminé et comprenant un organe de génération (18) configuré pour générer un champ magnétique dirigé le long de l'axe sensible (X-X), un gyroscope MEMS (6) étant solidaire du gyroscope RMN (4),
le procédé étant **caractérisé en ce qu'**il comporte, en outre, les étapes de :

- calcul, au cours du temps, d'un spectre courant d'un signal MEMS émis par le gyroscope MEMS (6) solidaire du gyroscope RMN (4) et présentant un axe sensible (X-X) confondu avec l'axe sensible (X-X) du gyroscope RMN (4), le signal MEMS étant représentatif d'une rotation autour de l'axe sensible (X-X), et détermination d'une fréquence de coupure (W) courante égale à la valeur de fréquence à partir de laquelle l'amplitude du spectre courant du signal MEMS est inférieure ou égale à un seuil prédéterminé ;
- commande de l'organe de génération (18) du gyroscope RMN (4) pour générer, au cours du temps, un champ magnétique dont l'amplitude est fonction de la fréquence de coupure (W) courante.

**7.** Procédé selon la revendication 6, comportant en outre les étapes de :

- détection d'une phase courante parmi une phase de démarrage et une phase de navigation ;
- dans le cas où la phase courante est une phase de démarrage, commande de l'organe de génération (18) pour générer un champ magnétique présentant une amplitude de consigne prédéterminée.

**8.** Produit programme d'ordinateur comprenant des instructions de code de programme qui, lorsqu'elles sont exécutées par un ordinateur, mettent en œuvre le procédé selon la revendication 6 ou 7.

**9.** Centrale de navigation inertielle, **caractérisée en ce qu'**elle comporte un premier et un deuxième dispositif de mesure (2) selon l'une quelconque des revendications 1 à 5, le premier et le deuxième dispositif de mesure (2) présentant des axes sensibles (X-X, Y-Y, Z-Z) non parallèles.

**10.** Centrale de navigation inertielle selon la revendication 9, comportant un troisième dispositif de mesure (2) selon l'une quelconque des revendications 1 à 5, le troisième dispositif de mesure (2) présentant un axe sensible (X-X, Y-Y, Z-Z) non parallèle à chacun des axes sensibles (X-X, Y-Y, Z-Z) du premier et du deuxième dispositif de mesure (2).

**Patentansprüche**

**1.** Rotationsmessvorrichtung (2), enthaltend ein NMR-Gyroskop (4) mit einer vorbestimmten empfindlichen Achse (X-X) und einen Rechner (8), wobei das NMR-Gyroskop (4) ferner ein Generierelement (18) umfasst, das dazu ausgelegt ist, um ein Magnetfeld zu generieren, das entlang der empfindlichen Achse (X-X) gerichtet ist, wobei der Rechner (8) dazu ausgelegt ist, aus einem von dem NMR-Gyroskop (4) gelieferten NMR-Signal eine Information bezüglich einer Rotation um die empfindliche Achse (X-X) zu berechnen,

wobei die Messvorrichtung (2) ferner ein MEMS-Gyroskop (6) enthält, das fest mit dem NMR-Gyroskop (4) verbunden ist,

wobei die Messvorrichtung **dadurch gekennzeichnet ist, dass** das MEMS-Gyroskop (6) eine empfindliche Achse (X-X) aufweist, die mit der empfindlichen Achse (X-X) des NMR-Gyroskops (4) zusammenfällt und in der Lage ist, ein MEMS-Signal zu liefern, das für eine Rotation um die empfindliche Achse (X-X) repräsentativ ist,

wobei der Rechner (8) auch dazu ausgelegt ist, im Laufe der Zeit ein aktuelles Spektrum des MEMS-Signals zu berechnen und eine aktuelle Grenzfrequenz (W) zu bestimmen, die gleich dem Frequenzwert ist, ab dem die Amplitude des aktuellen Spektrums des MEMS-Signals kleiner oder gleich einem vorbestimmten Schwellenwert ist,

wobei der Rechner (8) ferner dazu ausgelegt ist, das Generierelement (18) zu steuern, um im Laufe der Zeit ein Magnetfeld zu generieren, dessen Amplitude Funktion von der durch den Rechner (8) bestimmten aktuellen Grenzfrequenz (W) ist.

2. Messvorrichtung (2) nach Anspruch 1,

wobei das NMR-Gyroskop (4) eine Zelle (16) umfasst, die ein einziges von Null verschiedenes Kernspingas enthält, wobei das Gas ein gyromagnetisches Verhältnis (Y) aufweist, wobei das Generierelement (18) dazu ausgelegt ist, im Laufe der Zeit ein Magnetfeld zu generieren, dessen Amplitude größer oder gleich dem Ergebnis der Division der Grenzfrequenz (W) durch das gyromagnetische Verhältnis (Y) des Gases ist.

3. Messvorrichtung (2) nach Anspruch 1,

wobei das NMR-Gyroskop (4) eine Zelle (16) umfasst, die N Gase enthält, die jeweils einen Kernspin ungleich Null haben, wobei N eine natürliche ganze Zahl ist, die strikt größer als 1 ist, wobei jedes Gas ein eigenes gyromagnetisches Verhältnis ($Y_1$, $Y_2$, ..., $Y_i$, ..., $Y_N$) aufweist,

wobei die Absolutwerte der gyromagnetischen Verhältnisse paarweise verschieden sind, wobei das Generierelement (18) dazu ausgelegt ist, im Laufe der Zeit ein Magnetfeld zu generieren, dessen Amplitude größer oder gleich dem Maximum zwischen dem Ergebnis der Division der Grenzfrequenz (W) durch den kleineren der Absolutwerte der gyromagnetischen Verhältnisse ($Y_1$, $Y_2$, ..., $Y_i$, ..., $Y_N$) und dem Ergebnis jeder Division der doppelten Grenzfrequenz (W) durch jede der Differenzen zwischen dem Absolutwert eines gyromagnetischen Verhältnisses ($Y_2$, ..., $Y_i$, ..., $Y_N$) und dem Absolutwert eines gyromagnetischen Verhältnisses ($Y_1$, $Y_2$, ..., $Y_{i-1}$, ..., $Y_{N-1}$) ist, der unmittelbar kleiner ist.

4. Messvorrichtung (2) nach Anspruch 3, wobei die Zelle (16) ein erstes Gas und ein zweites Gas enthält, wobei das erste Gas Xenon 131 und das zweite Gas Xenon 129 ist.

5. Messvorrichtung (2) nach einem der Ansprüche 1 bis 4, wobei der Rechner (8) dazu ausgelegt ist, eine aktuelle Phase aus einer Startphase und einer Navigationsphase zu erfassen, wobei der Rechner (8) ferner dazu ausgelegt ist, in dem Fall, dass die aktuelle Phase eine Startphase ist, das Generierelement (18) zu steuern, um ein Magnetfeld mit einer vorbestimmten Sollamplitude zu generieren.

6. Rotationsmessverfahren, umfassend das Berechnen einer Information bezüglich einer Rotation um eine vorbestimmte empfindliche Achse (X-X) aus einem NMR-Signal, das von einem NMR-Gyroskop (4) geliefert wird, das die vorbestimmte empfindliche Achse (X-X) aufweist und ein Generierelement (18) enthält, das dazu ausgelegt ist, ein Magnetfeld zu generieren, das entlang der empfindlichen Achse (X-X) gerichtet ist, wobei ein MEMS-Gyroskop (6) fest mit dem NMR-Gyroskop (4) verbunden ist,

wobei das Verfahren **dadurch gekennzeichnet ist, dass** es ferner die folgenden Schritte umfasst:

- Berechnen, im Laufe der Zeit, eines aktuellen Spektrums eines MEMS-Signals, das von einem MEMS-Gyroskop (6) ausgegeben wird, das fest mit dem NMR-Gyroskop (4) verbunden ist und eine empfindliche Achse (X-X) aufweist, die mit der empfindlichen Achse (X-X) des NMR-Gyroskops (4) zusammenfällt, wobei das MEMS-Signal repräsentativ für eine Rotation um die empfindliche Achse (X-X) ist, und Bestimmen einer aktuellen Grenzfrequenz (W), die gleich dem Frequenzwert ist, ab dem die Amplitude des aktuellen Spektrums des MEMS-Signals kleiner oder gleich einem vorbestimmten Schwellenwert ist;
- Steuern des Generierelements (18) des NMR-Gyroskops (4), um im Laufe der Zeit ein Magnetfeld zu generieren, dessen Amplitude Funktion von der aktuellen Grenzfrequenz (W) ist.

7. Verfahren nach Anspruch 6, ferner umfassend die folgenden Schritte:

- Erkennen einer aktuellen Phase aus einer Startphase und einer Navigationsphase;
- in dem Fall, dass die aktuelle Phase eine Startphase ist, Steuern des Generierelements (18), um ein Magnetfeld mit einer vorbestimmten Sollamplitude zu generieren.

8. Computerprogrammprodukt mit Programmcodeanweisungen, die, wenn sie von einem Computer ausgeführt werden, das Verfahren nach Anspruch 6 oder 7 durchführen.

9. Trägheitsnavigationssystem,
**dadurch gekennzeichnet, dass** es eine erste und eine zweite Messvorrichtung (2) nach einem der Ansprüche 1 bis 5 enthält, wobei die erste und die zweite Messvorrichtung (2) nicht-parallele empfindliche Achsen (X-X, Y-Y, Z-Z) aufweisen.

10. Trägheitsnavigationssystem nach Anspruch 9, enthaltend eine dritte Messvorrichtung (2) nach einem der Ansprüche 1 bis 5, wobei die dritte Messvorrichtung (2) eine empfindliche Achse (X-X, Y-Y, Z-Z) aufweist, die nicht parallel zu jeder der empfindlichen Achsen (X-X, Y-Y, Z-Z) der ersten und zweiten Messvorrichtung (2) ist.

**Claims**

1. Device (2) for measuring rotation including an NMR gyroscope (4) having a predetermined sensitive axis (X-X) and a computer (8), the NMR gyroscope (4) further comprising a generation member (18) configured to generate a magnetic field directed along the sensitive axis (X-X),
the computer (8) being configured to compute, based on an NMR signal output by the NMR gyroscope (4), a data item relating to a rotation about the sensitive axis (X-X),
the measuring device (2) further comprising a MEMS gyroscope (6) rigidly connected to the NMR gyroscope (4),
the measuring device being **characterised in that**:

   the MEMS gyroscope (6) has a sensitive axis (X-X) merged with the sensitive axis (X-X) of the NMR gyroscope (4), and suitable for outputting a MEMS signal representative of a rotation about the sensitive axis (X-X),
   the computer (8) being also configured to analyse, over time, the MEMS signal, and to determine a present cutoff frequency (W) equal to the frequency value from which the amplitude of the present spectrum of the MEMS signal is less than or equal to a predetermined threshold,
   the computer (8) being further configured to control the generation member (18) so as to generate, over time, a magnetic field wherein the amplitude is dependent on the present cutoff frequency (W) determined by the computer (8).

2. Measuring device (2) according to claim 1, wherein the NMR gyroscope (4) includes a cell (16) comprising a single gas having a nuclear spin different to zero, the gas having a gyromagnetic ratio (Y), the generation member (18) being configured to generate, over time, a magnetic field wherein the amplitude is greater than or equal to the result of the division of the cutoff frequency (W) by the gyromagnetic ratio (Y) of the gas.

3. Measuring device (2) according to claim 1, wherein the NMR gyroscope (4) includes a cell (16) comprising N gases each having a nuclear spin different to zero, N being a natural integer strictly greater than 1, each gas having a specific gyromagnetic ratio ($\Upsilon_1$, $\Upsilon_2$, ...,$\Upsilon_i$, ..., $\Upsilon_N$), the absolute values of the gyromagnetic ratios being distinct in pairs, the generation member (18) being configured to generate, over time, a magnetic field wherein the amplitude is greater than or equal to the maximum among the result of the division of the cutoff frequency (W) by the smallest of the absolute values of the gyromagnetic ratios ($\Upsilon_1$, $\Upsilon_2$, ...,$\Upsilon_i$, ..., $\Upsilon_N$), and the result of each division of double the cutoff frequency (W) by each of the differences between the absolute value of a gyromagnetic ratio ($\Upsilon_2$, ...,$\Upsilon_i$, ..., $\Upsilon_N$) and the absolute value of a gyromagnetic ratio ($\Upsilon_1$, $\Upsilon_2$, ...,$\Upsilon_{i-1}$, ..., $\Upsilon_{N-1}$) which is immediately lower.

4. Measuring device (2) according to claim 3, wherein the cell (16) comprises a first gas and a second gas, the first gas being xenon 131 and the second gas being xenon 129.

5. Measuring device (2) according to any one of claims 1 to 4, wherein the computer (8) is configured to detect a present stage among a start-up stage and a navigation stage, the computer (8) being further configured to control, in the case where the present stage is a start-up stage, the generation member (18) so as to generate a magnetic field having a predetermined set-point amplitude.

6. Method for measuring rotation including the computing of a data item relating to a rotation about a predetermined sensitive axis (X-X), based on an NMR signal output by an NMR gyroscope (4) having the predetermined sensitive axis (X-X) and comprising a generation member (18) configured to generate a magnetic field directed along the sensitive axis (X-X), a MEMS gyroscope (6) being rigidly connected to the NMR gyroscope (4),
the method being **characterised in that** it further includes steps for:

- computing, over time, a present spectrum of a MEMS signal emitted by the MEMS gyroscope (6) rigidly connected to the NMR gyroscope (4) and having a sensitive axis (X-X) merged with the sensitive axis (X-X) of the NMR gyroscope (4), the MEMS signal being representative of a rotation about the sensitive axis (X-X), and determining a present cutoff frequency (W) equal to the frequency value from which the amplitude of the present spectrum of the MEMS signal is less than or equal to a predetermined threshold;
- commanding the generation member (18) of the NMR gyroscope (4) to generate, over time, a magnetic field wherein the amplitude is dependent on the present cutoff frequency (W).

7. Method according to claim 6, further including steps for:

- detecting a present stage among a start-up stage and a navigation stage;
- in the case where the present stage is a start-up stage, commanding the generation member (18) to generate a magnetic field having a predetermined set-point amplitude.

8. Computer program product comprising program code instructions which, when run by a computer, implement the method according to claim 6 or 7.

9. Inertial navigation unit, **characterised in that** it includes a first and a second measuring device (2) according to any one of claims 1 to 5, the first and the second measuring device (2) having non-parallel sensitive axes (X-X, Y-Y, Z-Z).

10. Inertial navigation unit according to claim 9, including a third measuring device (2) according to any one of claims 1 to 5, the third measuring device (2) having a sensitive axis (X-X, Y-Y, Z-Z) non-parallel to each of the sensitive axes (X-X, Y-Y, Z-Z) of the first and the second measuring device (2).

20  16  18  4  20                    6

X                                        X

23

8

24    25

26    27      22

28    29

2

# FIG. 1

Z

2            2
2

X                    Y

X            X

Y

30            Z

# FIG. 2

```
        ┌─────────────────┐
        │  Configuration  │────── 38
        └─────────────────┘
                 │
                 ▼
              ◇─────◇
             Détection ────── 40 ──────────────────────────┐
              ◇─────◇                                       │
                 │              └──────────────┐            │
                 ▼                             ▼            │
        ┌─────────────────┐  44      ┌─────────────────┐ 42 │
        │   Acquisition   │──        │    Démarrage    │──  │
        └─────────────────┘          └─────────────────┘    │
                 │                             │             │
                 ▼                             ▼             ▲
        ┌─────────────────┐  46                             │
        │     Analyse     │──                               │
        └─────────────────┘                                 │
                 │                                           │
                 ▼                                           │
        ┌─────────────────┐  48                             ▲
        │     Calcul      │──                               │
        └─────────────────┘                                 │
                 │                                           │
                 ▼                                           │
        ┌─────────────────┐  50                             │
        │    Commande     │──                               │
        └─────────────────┘                                 │
                 │                                           │
                 ▼                                           │
        ┌─────────────────┐  52                             │
        │    Synthèse     │──                               │
        └─────────────────┘                                 │
                 │                                           │
                 └───────────────────────────────────────────┘
```

# FIG. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4157495 A